# FASCICULE DE BREVET EUROPEEN

(11) **EP 0 700 192 B1**
(45) Date de publication et mention de la délivrance du brevet: **06.11.2002**
(21) Numéro de dépôt: 95202257.2
(22) Date de dépôt: 22.08.1995
(51) Int. Cl.: H04M 1/65, G11C 7/00, G11B 20/00

(54) **Enregistreur numérique de signaux sonores compressés**
Digitales Aufzeichnungsgerät für komprimierte Tonsignale
Digital recorder for compressed sound signals

(30) Priorité: 31.08.1994 FR 9410490
(43) Date de publication de la demande: 06.03.1996
(73) Titulaire: Koninklijke Philips Electronics N.V., 5621 BA Eindhoven (NL)
(72) Inventeur: Giron, Louis, Société Civile S.P.I.D., F-75008 Paris (FR); Boursier, Alain, Société Civile S.P.I.D., F-75008 Paris (FR); Lozach, Bruno, Société Civile S.P.I.D., F-75008 Paris (FR); Boursicaut, Estelle, Société Civile S.P.I.D., F-75008 Paris (FR)
(74) Mandataire: Charpail, François

(56) Documents cités:
- EP-A- 0 601 566
- IEEE TRANSACTIONS ON CONSUMER ELECTRONICS, vol. 39, no. 4, Novembre 1993 NEW YORK, pages 733-738, BERGER ET AL 'an application specific dsp for speech applications'
- PATENT ABSTRACTS OF JAPAN vol. 13 no. 108 (P-843) ,15 Mars 1989 & JP-A-63 285769 (CANON INC)
- PATENT ABSTRACTS OF JAPAN vol. 012 no. 451 (P-791) ,28 Novembre 1988 & JP-A-63 175267 (NEC CORP)
- PATENT ABSTRACTS OF JAPAN vol. 014 no. 537 (E-1006) ,27 Novembre 1990 & JP-A-02 228156 (MITSUBISHI ELECTRIC CORP)
- PATENT ABSTRACTS OF JAPAN vol. 010 no. 325 (E-451) ,6 Novembre 1986 & JP-A-61 133754 (FUJITSU LTD)
- PATENT ABSTRACTS OF JAPAN vol. 018 no. 084 (E-1506) ,10 Février 1994 & JP-A-05 292194 (MATSUSHITA ELECTRIC IND CO LTD)
- PATENT ABSTRACTS OF JAPAN vol. 014 no. 272 (P-1060) ,12 Juin 1990 & JP-A-02 078058 (KONICA CORP)

## Description

La présente invention concerne un enregistreur de sons, muni d'un convertisseur analogique/numérique, d'une mémoire pour enregistrer des échantillons numériques de son, et d'un microprocesseur pour notamment commander la lecture, l'effacement, ou l'inscription des dits échantillons en mémoire ainsi que pour changer le taux de compression des échantillons à y enregistrer.

Un enregistreur de ce genre est connu du document JP Kokai 2-78058 (Konica Corp). Ce document concerne un dispositif d'enregistrement du son, dans lequel un convertisseur analogique/numérique fournit des échantillons à enregistrer dans une mémoire. Pour accroître la longueur des messages qu'il est possible d'enregistrer dans la mémoire, la fréquence d'échantillonnage de la conversion analogique/numérique est diminuée lorsque la mémoire est remplie au delà d'un certain seuil. Ce procédé a l'inconvénient que toutes les données enregistrées ne présentent pas la même qualité, selon qu'elles sont enregistrées avec l'une ou l'autre des fréquences d'échantillonnage. En outre si une augmentation du taux de compression est bien obtenue par la simple réduction de la fréquence d'échantillonnage, cette réduction dégrade la qualité des messages enregistrés.

Un but de l'invention est de fournir un enregistreur numérique qui présente une durée d'enregistrement possible encore améliorée ainsi qu'une meilleure qualité des messages enregistrés et qui peut traiter tous ces derniers de façon égale.

Un enregistreur selon l'invention est remarquable en ce qu'il est muni de deux dispositifs de compression distincts, pour comprimer les échantillons issus du convertisseur analogique/numérique, fonctionnant tous deux à partir d'un même nombre d'échantillons prélevés par unité de temps, le premier dispositif délivrant des signaux compressés avec un premier taux de compression, et le second dispositif délivrant des signaux compressés avec un second taux de compression plus élevé, et le microprocesseur est muni
- de premiers moyens pour comprimer, par le premier dispositif de compression, des échantillons numériques arrivants, le taux de compression le plus faible étant donc utilisé, et pour inscrire, au fur et à mesure de leur compression, des échantillons compressés dans la mémoire,
- et de seconds moyens pour lire dans la mémoire des échantillons précédemment inscrits, pour les appliquer au second dispositif de compression afin qu'ils soient compressés à nouveau, cette fois avec le taux de compression plus élevé, en remplacement des échantillons moins compressés.

L'utilisation d'un dispositif de compression évolué est préférable à une simple réduction de la fréquence d'échantillonnage. Toutefois, avec un tel dispositif, plus le taux de compression utilisé est élevé, plus le temps nécessaire pour réaliser la compression augmente, parce qu'il est difficile (ce qui implique beaucoup de calculs) de comprimer beaucoup tout en sauvegardant au maximum la qualité du signal. Pour des taux très élevés, il peut même arriver que le dispositif ne puisse plus suivre la cadence d'arrivée des échantillons. Par exemple la compression d'un message d'une minute peut réclamer trente minutes pour être compressé très fortement. L'invention est donc basée sur l'idée de reprendre ultérieurement la compression qui n'a pas pu être faite en temps réel.

Dans une forme de réalisation particulière, les deux dispositifs de compression sont constitués par des éléments de logiciel chargés dans un processeur de signaux (DSP).

Un premier procédé à mettre en oeuvre dans un enregistreur de sons selon l'invention, destiné à des messages sonores dont la réception se présente par éléments distincts, chacun de durée limitée, est remarquable en ce que, lors de la réception d'un message sonore, le microprocesseur utilise les premiers moyens jusqu'à la fin de la réception de l'élément en cours en réalisant la compression, par le premier dispositif de compression, des échantillons numériques arrivants et leur inscription dans la mémoire puis, lorsque l'élément courant est entièrement enregistré, il relit l'élément qui vient d'être reçu et en applique les échantillons au second dispositif de compression, afin qu'ils soient compressés avec le taux de compression plus élevé, et il inscrit dans la mémoire les échantillons de cet élément compressés avec un taux plus élevé, en remplacement des échantillons moins compressés.
Ainsi la mémoire ne contient, à terme, que des échantillons compressés avec le taux de compression le plus élevé.

Dans un second procédé à mettre en oeuvre aussi dans un enregistreur de sons selon l'invention, destiné à des messages sonores dont la réception se présente par éléments distincts, chacun de durée limitée, le microprocesseur utilise les premiers moyens tant que le remplissage de la mémoire est inférieur à un pourcentage donné, et quand le remplissage de la mémoire dépasse le dit pourcentage donné, il attend la fin de la réception de l'élément en cours, et commande alors la reprise de tous les échantillons précédemment contenus dans la mémoire, leur application au second dispositif de compression afin qu'ils soient compressés à nouveau mais avec le taux de compression plus élevé, et enfin il inscrit dans la mémoire des échantillons compressés à un taux plus élevé, en remplacement des échantillons moins compressés.
Avec ce procédé, tant que le remplissage reste faible, le taux de compression le plus bas est seul utilisé, ce qui procure une meilleure qualité lors de la restitution des messages.

Avantageusement, le microprocesseur met d'abord en oeuvre le second procédé ci-dessus puis, le remplissage de la mémoire ayant franchi un pourcentage donné, et l'ensemble des échantillons ayant été relu et inscrit dans la mémoire sous une forme comprimée à un taux plus élevé, il met en oeuvre le premier procédé pour les messages ultérieurs.

Un téléphone répondeur/enregistreur est avantageusement muni d'un enregistreur de sons selon l'invention, dont le microprocesseur est programmé de façon à mettre en oeuvre un procédé selon l'invention.

Ces aspects de l'invention ainsi que d'autres aspects plus détaillés apparaîtront plus clairement grâce à la description suivante d'un mode de réalisation non limitatif. La figure unique représente schématiquement les constituants d'un téléphone/répondeur selon l'invention.

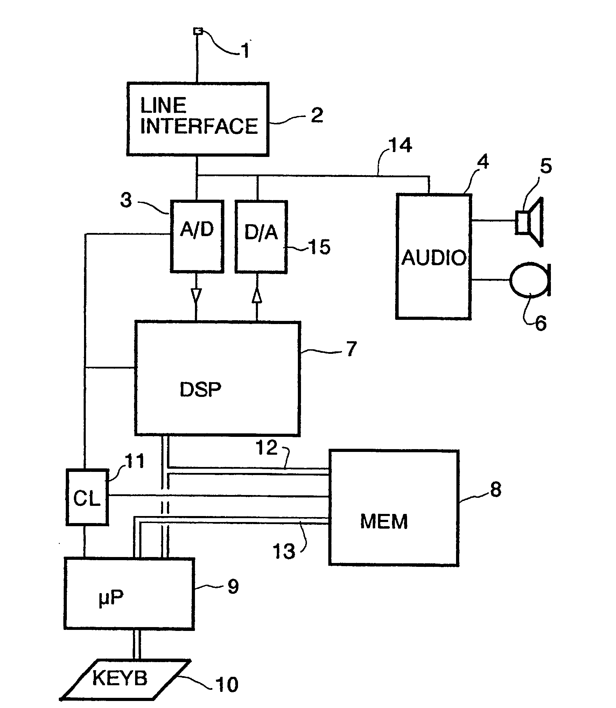

Le téléphone/répondeur de la figure 1 comporte un enregistreur de sons numérique.
Une entrée 1 est reliée à une ligne téléphonique, qui transporte des messages sous forme analogique, en général des sons ou signaux vocaux.
Ces signaux sont transmis, via un module d'interface ligne 2, de la ligne vers le convertisseur analogique/numérique 3, ou dans l'autre direction, du convertisseur numérique/analogique 15 vers la ligne.
Le module d'interface 2 comporte des éléments connus de redressement et/ou de protection qui ne concernent pas l'invention.
La sortie du module d'interface ligne du côté du convertisseur analogique/numérique est aussi reliée par une connexion bi-directionnelle 14 avec le circuit de traitement audio 4, qui alimente un haut-parleur ou écouteur 5 et reçoit des signaux d'un microphone 6.

Le téléphone répondeur/enregistreur comporte en outre un microprocesseur 9, un processeur de signal 7, et une mémoire 8, qui sont plus spécialement, quoique non exclusivement, destinés à constituer un enregistreur de sons numérique.
Les signaux convertis à fréquence fixe par le convertisseur analogique/numérique 3 sont amenés au processeur numérique de signal 7, d'un type connu sous l'appellation "DSP" (Digital Signal Processor). Un tel processeur numérique de signal a une architecture spécialisée pour faciliter le calcul numérique en temps réel. Typiquement un DSP est un dispositif ultra-rapide avec un jeu d'instructions réduit qui peut réaliser des tâches limitées (telles que des tâches arithmétiques) de façon beaucoup plus rapide qu'un microprocesseur, lequel est plus polyvalent mais beaucoup plus lent. Son architecture est déterminée essentiellement par la recherche de la plus grande vitesse de calcul, au détriment des commodités de programmation et surtout de la capacité de mémoire, notamment de la mémoire de programme. Le processeur 7 est muni d'un logiciel de compression du signal de parole d'un type connu, par exemple de la famille désignée par le vocable "CELP". Dans les logiciels de cette famille, il existe plusieurs niveaux de complexité. On peut ainsi choisir entre plusieurs logiciels fournissant des taux de compression différents, à chacun desquels correspond un gain de place en mémoire et un temps de calcul donnés. Dans le processeur 7 sont implantés deux logiciels connus, que l'on peut appeler au choix. L'un d'eux délivre des signaux compressés avec un premier taux de compression, qui fournit par exemple 8 kilo-bits par seconde pour le signal compressé, et l'autre délivre des signaux compressés avec un second taux de compression plus élevé, qui délivre par exemple 5 kilo-bits par seconde pour le signal compressé. Les échantillons numériques représentant les signaux compressés produits par le processeur 7 sont transmis à la mémoire 8 par un bus de données 12.
Le microprocesseur 9 est relié à la mémoire 8 par un bus d'adresses 13 qui pointe l'emplacement où lire ou écrire dans la mémoire, et porte le signal de lecture/écriture correspondant.
Puisque ce microprocesseur gère les adresses de la mémoire 8, il dispose bien évidemment des données qui lui permettent de connaître le remplissage de la mémoire.
Il est en outre relié par le bus de données 12 au processeur de signal 7. Cela lui permet de commander le pointeur de programme de ce processeur pour choisir un logiciel de compression ou l'autre.

Tout ceci permet donc au microprocesseur 9 de commander la lecture, l'effacement, ou l'inscription des échantillons de signal compressé en mémoire ainsi que de choisir la compressibilité des échantillons à y enregistrer.
Une horloge 11 est fournie à tous les constituants du système de compression (processeur 7, microprocesseur 9, convertisseur analogique/numérique 3 et convertisseur numérique/analogique 15) afin de les synchroniser. Bien entendu le DSP a un temps de cycle interne bien plus court que la période de l'horloge 11 (il possède une horloge spécifique non représentée, dont la fréquence est un multiple de celle de l'horloge 11) de façon à réaliser un grand nombre d'opérations de calcul de compression entre les arrivées de deux échantillons successifs sortant du convertisseur analogique/numérique 3. Le rythme d'arrivée des échantillons sortant du convertisseur analogique/numérique 3 est par exemple de 8 à 12 bits toutes les 125 µS environ.

Le microprocesseur 9 comporte un programme pour commander la compression des échantillons numériques arrivants du convertisseur analogique/numérique 3, en utilisant le premier logiciel de compression du DSP 7 (taux de compression le plus faible) et pour inscrire dans la mémoire, au fur et à mesure de leur compression, les échantillons compressés sortant du DSP.
Le microprocesseur 9 comporte aussi un programme pour commander la lecture dans la mémoire d'échantillons précédemment inscrits, pour les faire traiter par le second logiciel de compression du DSP afin d'obtenir des échantillons compressés avec un taux de compression plus élevé, pour inscrire dans la mémoire les échantillons ainsi compressés, et pour supprimer les échantillons moins compressés qu'ils remplacent.
Dans un téléphone répondeur, les messages à enregistrer ont normalement une durée limitée, autrement dit la réception des messages sonores se présente par éléments de conversation distincts, chacun de durée limitée, entre lesquels l'enregistreur ne reçoit pas de messages.
Le modèle de DSP choisi doit avoir une vitesse telle que, lorsque le premier taux de compression est utilisé, le temps de calcul moyen de la compression d'un échantillon dure au maximum un cycle de l'horloge 11, c'est-à-dire le temps entre la présentation de deux échantillons.
Par contre, dans le cas du second logiciel de compression au taux plus élevé, le temps de calcul est plus long et le DSP ne peut pas comprimer les échantillons à leur cadence d'arrivée.

Pour pallier cet empêchement, dans une première variante, le microprocesseur est programmé pour utiliser le premier logiciel du processeur 7 au cours de la réception d'un message, et continuer, tant que dure le message, la compression par le premier logiciel de compression des échantillons numériques arrivants et leur inscription dans la mémoire puis, lorsque l'élément de conversation courant est entièrement enregistré (ce qui est signalé par le fait que le combiné est raccroché, ce que bien entendu le microprocesseur 9 sait), pour commander la lecture des échantillons de l'élément de conversation qui vient d'être reçu et leur traitement par le DSP utilisant le second logiciel de compression, afin qu'ils soient compressés avec le taux de compression plus élevé, et pour inscrire dans la mémoire les échantillons de cet élément de conversation compressés avec un taux plus élevé, puis il supprime les échantillons moins compressés qu'ils remplacent.
Les données antérieures moins compressées ne sont détruites qu'après l'achèvement complet du traitement de compression au taux le plus élevé. En effet une interruption pourrait survenir pendant le traitement, par exemple une coupure de secteur ou un nouvel appel téléphonique requérant un enregistrement immédiat. Dans un tel cas le traitement est interrompu pour être repris ensuite, et les données anciennes sont conservées intégralement jusqu'à ce que traitement ait pu être terminé.

Dans une deuxième variante, le microprocesseur est programmé pour utiliser le premier logiciel du processeur 7 tant que le remplissage de la mémoire est inférieur à un pourcentage donné (par exemple 80%), et quand le remplissage de la mémoire dépasse le dit pourcentage donné, pour attendre la fin de la réception de l'élément en cours, et commander alors la lecture de tous les échantillons précédemment enregistrés et leur traitement par le DSP utilisant le second logiciel de compression, afin qu'ils soient compressés à nouveau avec le taux de compression plus élevé, et pour inscrire dans la mémoire les échantillons compressés à un taux plus élevé, à partir de l'adresse zéro de la mémoire.
Comme cela a déjà été expliqué plus haut, on ne détruit les données anciennes qu'une fois le processus de compression achevé.
Si par exemple la compression au second taux fournit des échantillons qui occupent 60% de la place occupée par des échantillons compressés au premier taux, et que le déclenchement de la seconde compression de l'ensemble des échantillons précédemment enregistrés se produit lorsque la mémoire est remplie à 80%, elle se trouvera remplie à 48% seulement après cette opération. A partir de ce moment, tous les messages reçus seront comprimés à nouveau après la fin de chaque réception, un par un, selon le principe exposé plus haut (première variante).

Le processeur DSP 7 est bien entendu muni aussi de deux logiciels de décompression d'échantillons numériques correspondant respectivement aux logiciels de compression, et le microprocesseur 9 prévoit, si une partie de la mémoire 8 est enregistrée avec un taux et une autre partie avec un autre taux, de changer de logiciel de décompression au moment voulu lors de la lecture des messages.

Un clavier 10 permet à l'utilisateur de dialoguer avec le microprocesseur 9 de façon connue, pour commander l'appareil, par exemple mettre en ou hors service le répondeur, commander la lecture des messages, leur effacement, etc.

## Revendications

**1.** Enregistreur de messages, muni d'un convertisseur analogique/numérique (3), d'une mémoire (8) pour enregistrer des échantillons numériques de message, et d'un microprocesseur (9) pour notamment commander la lecture, l'effacement, ou l'inscription des dits échantillons en mémoire ainsi que pour changer la compressibilité des échantillons à y enregistrer, **caractérisé en ce que** l'enregistreur est muni de deux dispositifs de compression (7) pour comprimer les échantillons issus du convertisseur analogique/numérique, fonctionnant tous deux à partir d'un même nombre d'échantillons prélevés par unité de temps, le premier dispositif délivrant des signaux compressés avec un premier taux de compression, et le second dispositif délivrant des signaux compressés avec un second taux de compression plus élevé, et le microprocesseur est muni
- de premiers moyens pour comprimer, par le premier dispositif de compression, des échantillons numériques arrivants, le taux de compression le plus faible étant donc utilisé, et pour inscrire, au fur et à mesure de leur compression, des échantillons compressés dans la mémoire,
- et de seconds moyens pour lire dans la mémoire des échantillons précédemment inscrits, pour les appliquer au second dispositif de compression afin qu'ils soient compressés à nouveau, cette fois avec le taux de compression le plus élevé, et pour inscrire dans la mémoire les échantillons ainsi compressés à nouveau, en remplacement des échantillons moins compressés.

**2.** Enregistreur de messages selon la revendication 1, **caractérisé en ce que** lesdits messages sont des messages sonores.

**3.** Enregistreur de messages selon l'une des revendications 1 ou 2, **caractérisé en ce que** les deux dispositifs de compression sont constitués par des éléments de logiciel chargés dans un processeur de signaux de type DSP.

**4.** Procédé mis en oeuvre dans un enregistreur de messages selon l'une des revendications 1 ou 2, cet enregistreur étant muni
- d'un convertisseur analogique/numérique (3),
- d'une mémoire (8) pour enregistrer des échantillons numériques de message,
- d'un microprocesseur (9) pour notamment commander la lecture, l'effacement, ou l'inscription des dits échantillons en mémoire ainsi que pour changer la compressibilité des échantillons à y enregistrer,
- de deux dispositifs de compression (7) pour comprimer les échantillons issus du convertisseur analogique/numérique, fonctionnant tous deux à partir d'un même nombre d'échantillons prélevés par unité de temps, le premier dispositif délivrant des signaux compressés avec un premier taux de compression, et le second dispositif délivrant des signaux compressés avec un second taux de compression plus élevé, et le microprocesseur étant muni
- de premiers moyens pour comprimer, par le premier dispositif de compression, des échantillons numériques arrivants, le taux de compression le plus faible étant donc utilisé, et pour inscrire, au fur et à mesure de leur compression, des échantillons compressés dans la mémoire,
- et de seconds moyens pour lire dans la mémoire des échantillons précédemment inscrits, pour les appliquer au second dispositif de compression afin qu'ils soient compressés à nouveau, cette fois avec le taux de compression le plus élevé, et pour inscrire dans la mémoire les échantillons ainsi compressés à nouveau, en remplacement des échantillons moins compressés,
ledit procédé étant destiné à des messages dont la réception se présente par éléments distincts, chacun de durée limitée,
**caractérisé en ce que**, lors de la réception d'un message, le microprocesseur utilise les premiers moyens jusqu'à la fin de la réception de l'élément en cours en réalisant la compression, par le premier dispositif de compression, des échantillons numériques arrivants et leur inscription dans la mémoire puis, lorsque l'élément courant est entièrement enregistré, il relit l'élément qui vient d'être reçu et en applique les échantillons au second dispositif de compression, afin qu'ils soient compressés avec le taux de compression le plus élevé, et il inscrit dans la mémoire les échantillons de cet élément compressés avec le taux le plus élevé, en remplacement des échantillons moins compressés.

**5.** Procédé mis en oeuvre dans un enregistreur de messages selon l'une des revendications 1 ou 2, cet enregistreur étant muni
- d'un convertisseur analogique/numérique (3),
- d'une mémoire (8) pour enregistrer des échantillons numériques de message,
- d'un microprocesseur (9) pour notamment commander la lecture, l'effacement, ou l'inscription des dits échantillons en mémoire ainsi que pour changer la compressibilité des échantillons à y enregistrer,
- de deux dispositifs de compression (7) pour comprimer les échantillons issus du convertisseur analogique/numérique, fonctionnant tous deux à partir d'un même nombre d'échantillons prélevés par unité de temps, le premier dispositif délivrant des signaux compressés avec un premier taux de compression, et le second dispositif délivrant des signaux compressés avec un second taux de compression plus élevé, et le microprocesseur étant muni
- de premiers moyens pour comprimer, par le premier dispositif de compression, des échantillons numériques arrivants, le taux de compression le plus faible étant donc utilisé, et pour inscrire, au fur et à mesure de leur compression, des échantillons compressés dans la mémoire,
- et de seconds moyens pour lire dans la mémoire des échantillons précédemment inscrits, pour les appliquer au second dispositif de compression afin qu'ils soient compressés à nouveau, cette fois avec le taux de compression le plus élevé, et pour inscrire dans la mémoire les échantillons ainsi compressés à nouveau, en remplacement des échantillons moins compressés,
ledit procédé étant destiné à des messages dont la réception se présente par éléments distincts, **caractérisé en ce que** le microprocesseur utilise les premiers moyens tant que le remplissage de la mémoire est inférieur à un pourcentage donné, et quand le remplissage de la mémoire dépasse le dit pourcentage donné, il attend la fin de la réception de l'élément en cours, et commande alors la reprise de tous les échantillons précédemment contenus dans la mémoire, leur application au second dispositif de compression afin qu'ils soient compressés à nouveau mais avec le taux de. compression le plus élevé, et enfin il inscrit dans la mémoire des échantillons compressés à un taux plus élevé, en remplacement des échantillons moins compressés.

**6.** Procédé mis en oeuvre dans un enregistreur de messages selon l'une des revendications 1 ou 2, cet enregistreur étant muni
- d'un convertisseur analogique/numérique (3),
- d'une mémoire (8) pour enregistrer des échantillons numériques de message,
- d'un microprocesseur (9) pour notamment commander la lecture, l'effacement, ou l'inscription des dits échantillons en mémoire ainsi que pour changer la compressibilité des échantillons à y enregistrer,
- de deux dispositifs de compression (7) pour comprimer les échantillons issus du convertisseur analogique/numérique, fonctionnant tous deux à partir d'un même nombre d'échantillons prélevés par unité de temps, le premier dispositif délivrant des signaux compressés avec un premier taux de compression, et le second dispositif délivrant des signaux compressés avec un second taux de compression plus élevé, et le microprocesseur étant muni
- de premiers moyens pour comprimer, par le premier dispositif de compression, des échantillons numériques arrivants, le taux de compression le plus faible étant donc utilisé, et pour inscrire, au fur et à mesure de leur compression, des échantillons compressés dans la mémoire,
- et de seconds moyens pour lire dans la mémoire des échantillons précédemment inscrits, pour les appliquer au second dispositif de compression afin qu'ils soient compressés à nouveau, cette fois avec le taux de compression le plus élevé, et pour inscrire dans la mémoire les échantillons ainsi compressés à nouveau, en remplacement des échantillons moins compressés,
ledit procédé étant destiné à des messages dont la réception se présente par éléments distincts, **caractérisé en ce que** le microprocesseur met d'abord en oeuvre le procédé selon la revendication 5 puis, le remplissage de la mémoire ayant franchi un pourcentage donné, et l'ensemble des échantillons ayant été relu et inscrit dans la mémoire sous une forme comprimée à un taux plus élevé, il met en oeuvre le procédé selon la revendication 4 pour les messages ultérieurs.

**7.** Téléphone répondeur/enregistreur, **caractérisé en ce qu'**il est muni d'un enregistreur de messages lui-même muni :
- d'un convertisseur analogique/numérique (3),
- d'une mémoire (8) pour enregistrer des échantillons numériques de message,
- d'un microprocesseur (9) pour notamment commander la lecture, l'effacement, ou l'inscription des dits échantillons en mémoire ainsi que pour changer la compressibilité des échantillons à y enregistrer,
- de deux dispositifs de compression (7) pour comprimer les échantillons issus du convertisseur analogique/numérique, fonctionnant tous deux à partir d'un même nombre d'échantillons prélevés par unité de temps, le premier dispositif délivrant des signaux compressés avec un premier taux de compression, et le second dispositif délivrant des signaux compressés avec un second taux de compression plus élevé, ledit microprocesseur étant muni :
- de premiers moyens pour comprimer, par le premier dispositif de compression, des échantillons numériques arrivants, le taux de compression le plus faible étant donc utilisé, et pour inscrire, au fur et à mesure de leur compression, des échantillons compressés dans la mémoire,
- et de seconds moyens pour lire dans la mémoire des échantillons précédemment inscrits, pour les appliquer au second dispositif de compression afin qu'ils soient compressés à nouveau, cette fois avec le taux de compression le plus élevé, et pour inscrire dans la mémoire les échantillons ainsi compressés à nouveau, en remplacement des échantillons moins compressés.

**7.** Téléphone répondeur/enregistreur selon la revendication 7, **caractérisé en ce que** lesdits messages sont des messages sonores.

**8.** Téléphone répondeur/enregistreur selon l'une des revendications 7 ou 8, **caractérisé en ce que** le microprocesseur de l'enregistreur comporte un élément de programme comprenant des moyens permettant la mise en oeuvre des étapes du procédé selon la revendication 4.

**9.** Téléphone répondeur/enregistreur selon l'une des revendications 7 ou 8, **caractérisé en ce que** le microprocesseur de l'enregistreur comporte un élément de programme comportant des moyens permettant la mise en oeuvre des étapes du procédé selon la revendication 5.

## Claims

**1.** A message recorder, comprising an analog/digital converter (3), a memory (8) for recording digital message samples, and a microprocessor (9) for particularly controlling reading, erasing, or writing said samples from/in the memory as well as changing the compression rate of the samples to be recorded in the memory, **characterized in that** the recorder comprises two compression devices (7) for compressing the samples coming from the analog/digital converter, the two devices operating from an equal number of samples taken per unit of time, the first device delivering signals compressed at a first compression rate and the second device delivering signals compressed at a second, higher, compression rate, and the microprocessor comprises
- first means for compressing by the first compression device digital incoming samples while the lower compression rate is used, and for writing compressed samples in the memory according as their compression is fulfilled,
- and second means for reading from the memory samples that have previously been written, so as to apply the samples to the second compression device, so that they are compressed once again, this time at the higher compression rate, and for writing in the memory the samples thus compressed again as a replacement of the less-compressed samples.

**2.** A message recorder as claimed in claim 1, **characterized in that** said messages are sound messages.

**3.** A message recorder as claimed in one of the claims 1 or 2, **characterized in that** the two compression devices are formed by software loaded in a signal processor of the DSP type.

**4.** A method used in a message recorder as claimed in one of the claims 1 or 2, this recorder comprising
- an analog/digital converter (3),
- a memory (8) for recording digital message samples,
- a microprocessor (9) for particularly controlling reading, erasing, or writing said samples from/in the memory as well as changing the compression rate of the samples to be recorded in the memory,
- two compression devices (7) for compressing the samples coming from the analog/digital converter, the two devices operating from an equal number of samples taken per unit of time, the first device delivering signals compressed at a first compression rate and the second device delivering signals compressed at a second, higher, compression rate, and the microprocessor comprising
- first means for compressing by the first compression device digital incoming samples while the lower compression rate is used, and for writing compressed samples in the memory according as their compression is fulfilled,
- and second means for reading from the memory samples that have previously been written, so as to apply the samples to the second compression device, so that they are compressed once again, this time at the higher compression rate, and for writing in the memory the samples thus compressed again as a replacement of the less-compressed samples, said method being intended for messages received in separate elements, each of limited duration, **characterized in that**, during the reception of a message, the microprocessor utilizes the first means until the end of the running element has been received while the first compression device compresses incoming digital samples and writes them in the memory after which, when the current element has been recorded completely, it re-reads the element that has just been received and applies thereof the samples to the second compression device, so that they are compressed at the higher compression rate, and it writes the samples of this element, compressed at a higher rate, in the memory by replacing less compressed samples.

**5.** A method used in a message recorder as claimed in one of the claims 1 or 2, this recorder comprising, - an analog/digital converter (3),
- a memory (8) for recording digital message samples,
- a microprocessor (9) for particularly controlling reading, erasing, or writing said samples from/in the memory as well as changing the compression rate of the samples to be recorded in the memory,
- two compression devices (7) for compressing the samples coming from the analog/digital converter, the two devices operating from an equal number of samples taken per unit of time, the first device delivering signals compressed at a first compression rate and the second device delivering signals compressed at a second, higher, compression rate, and the microprocessor comprising
- first means for compressing by the first compression device digital incoming samples while the lower compression rate is used, and for writing compressed samples in the memory according as their compression is fulfilled,
- and second means for reading from the memory samples that have previously been written, so as to apply the samples to the second compression device, so that they are compressed once again, this time at the higher compression rate, and for writing in the memory the samples thus compressed again as a replacement of the less-compressed samples, said method being intended for messages received in separate elements, **characterized in that** the microprocessor utilizes the first means as long as the memory filling is lower than a given percentage, and when the memory filling exceeds said given percentage it waits until the end of the current element has been received and then controls all the samples previously contained in the memory to be taken again, and applied to the second compression device so that they are compressed once again, but at the higher compression rate and, finally, writes samples compressed at a higher rate in the memory as a replacement of less compressed samples.

**6.** A method used in a message recorder as claimed in one of the claims 1 or 2, this recorder comprising
- an analog/digital converter (3),
- a memory (8) for recording digital message samples,
- a microprocessor (9) for particularly controlling reading, erasing, or writing said samples from/in the memory as well as changing the compression rate of the samples to be recorded in the memory,
- two compression devices (7) for compressing the samples coming from the analog/digital converter, the two devices operating from an equal number of samples taken per unit of time, the first device delivering signals compressed at a first compression rate and the second device delivering signals compressed at a second, higher, compression rate, and the microprocessor comprising
- first means for compressing by the first compression device digital incoming samples while the lower compression rate is used, and for writing compressed samples in the memory according as their compression is fulfilled,
- and second means for reading from the memory samples that have previously been written, so as to apply the samples to the second compression device, so that they are compressed once again, this time at the higher compression rate, and for writing in the memory the samples thus compressed again as a replacement of the less-compressed samples, said method being intended for messages received in separate elements, **characterized in that** the microprocessor first implements the method as claimed in Claim 5, and after this, when the filling of the memory has exceeded a given percentage, and all the samples which have again been read and written in the memory in a form compressed at a higher rate, it implements the method as claimed in Claim 4 for subsequent messages.

**7.** A telephone answering machine/recorder, **characterized in that** it comprises a message recorder itself comprising
- an analog/digital converter (3),
- a memory (8) for recording digital message samples,
- a microprocessor (9) for particularly controlling reading, erasing, or writing said samples from/in the memory as well as changing the compression rate of the samples to be recorded in the memory,
- two compression devices (7) for compressing the samples coming from the analog/digital converter, the two devices operating from an equal number of samples taken per unit of time, the first device delivering signals compressed at a first compression rate and the second device delivering signals compressed at a second, higher, compression rate, and the microprocessor comprising
- first means for compressing by the first compression device digital incoming samples while the lower compression rate is used, and for writing compressed samples in the memory according as their compression is fulfilled,
- and second means for reading from the memory samples that have previously been written, so as to apply the samples to the second compression device, so that they are compressed once again, this time at the higher compression rate, and for writing in the memory the samples thus compressed again as a replacement of the less-compressed samples.

**7.** A telephone answering machine/recorder as claimed in Claim 6, **characterized in that** said messages are sound messages.

**8.** A telephone answering machine/recorder as claimed in one of the claims 6 or 7, **characterized in that** the microprocessor of the recorder comprises a program unit comprising means that make it possible to use steps of the method as claimed in Claim 4.

**9.** A telephone answering machine/recorder as claimed in one of the claims 6 or 7, **characterized in that** the microprocessor of the recorder comprises a program unit comprising means that make it possible to use steps of the method as claimed in Claim 5.

## Patentansprüche

**1.** Nachrichten-Aufzeichnungsgerät, versehen mit einem Analog/DigitalWandler (3), einem Nachrichtenspeicher (8) (zum Aufzeichnen der digitalen Tonmuster) und einem Mikroprozessor (9), um insbesondere das speicherbedingte Lesen, Löschen oder Schreiben der besagten Muster zu steuern, und um den Komprimierungsgrad der aufzuzeichnenden Muster zu ändern, **dadurch gekennzeichnet, dass** das Aufzeichnungsgerät mit zwei Komprimierungsvorrichtungen (7) versehen ist, um die aus dem Analog/Digital-Wandler kommenden Muster zu komprimieren, die beide anhand einer selben Anzahl pro Zeiteinheit entnommenen Mustern arbeiten, wobei die erste Vorrichtung komprimierte Signale mit einem ersten Komprimierungsgrad, und die zweite Vorrichtung komprimierte Signale mit einem größeren Komprimierungsgrad abgibt, und der Mikroprozessor versehen ist mit
- ersten Verfahren zum Komprimieren ankommender digitaler Muster mit der ersten Komprimierungsvorrichtung, wobei folglich der kleinste Komprimierungsgrad angewandt wird, und um im Zuge ihrer Komprimierung komprimierte Muster in den Speicher zu schreiben, und
- zweiten Verfahren zum Lesen von zuvor in den Speicher geschriebenen Mustern, um sie der zweiten Komprimierungsvorrichtung zuzuführen, damit sie erneut komprimiert werden, diesmal mit dem größten Komprimierungsgrad, und um die so komprimierten Muster erneut in den Speicher zu schreiben, indem die weniger komprimierten Muster ersetzt werden.

**2.** Aufzeichnungsgerät nach Anspruch 1, **dadurch gekennzeichnet, dass** die besagten Nachrichten Tonnachrichten sind.

**3.** Aufzeichnungsgerät nach einem der Ansprüche 1 oder 2, **dadurch gekennzeichnet, dass** die beiden Komprimierungsvorrichtungen aus in einen Signalprozessor vom Typ DSP geladenen Softwareelementen gebildet werden.

**4.** In einem Nachrichten-Aufzeichnungsgerät nach einem der Ansprüche 1 oder 2 umgesetztes Verfahren, wobei dieses Aufzeichnungsgerät versehen ist mit
- einem Analog/Digital-Wandler (3),
- einem Speicher (8) zum Aufzeichnen der digitalen Nachrichtenmuster, und
- einem Mikroprozessor (9), um insbesondere das speicherbedingte Lesen, Löschen oder Schreiben der besagten Muster zu steuern, und um den Komprimierungsgrad der dort aufzuzeichnenden Muster zu ändern,
- zwei gesonderten Komprimierungsvorrichtungen (7), um die aus dem Analog/Digital-Wandler kommenden Muster zu komprimieren, die beide anhand einer selben Anzahl pro Zeiteinheit entnommenen Mustern arbeiten, wobei die erste Vorrichtung komprimierte Signale mit einem ersten Komprimierungsgrad, und die zweite Vorrichtung komprimierte Signale mit einem größeren Komprimierungsgrad abgibt, und der Mikroprozessor versehen ist mit
- ersten Verfahren zum Komprimieren ankommender digitaler Muster mit der ersten Komprimierungsvorrichtung, wobei folglich der kleinste Komprimierungsgrad angewandt wird, und um im Zuge ihrer Komprimierung komprimierte Muster in den Speicher zu schreiben, und
- zweiten Verfahren zum Lesen von zuvor in den Speicher geschriebenen Mustern, um sie der zweiten Komprimierungsvorrichtung zuzuführen, damit sie erneut komprimiert werden, diesmal mit dem größten Komprimierungsgrad, und um die so komprimierten Muster erneut in den Speicher zu schreiben, indem die weniger komprimierten Muster ersetzt werden,
wobei das Verfahren für Tonnachrichten bestimmt ist, deren Empfang mit gesonderten Elementen jeweils begrenzter Dauer stattfindet,
**dadurch gekennzeichnet, dass** beim Empfang einer Nachricht der Mikroprozessor die ersten Verfahren bis zum Ende des Empfangs des laufenden Elements anwendet, indem die ankommenden digitalen Muster mit der ersten Komprimierungsvorrichtung komprimiert und in den Speicher eingetragen werden, und nachdem das laufende Element vollständig aufgezeichnet ist, er das soeben erhaltene Element erneut liest und deren Muster der zweiten Komprimierungsvorrichtung überträgt, damit sie mit dem größeren Komprimierungsgrad komprimiert werden, und er schreibt die Muster dieses mit dem größeren Verhältnis komprimierten Elements in den Speicher, indem er die weniger komprimierten Muster ersetzt.

**5.** In einem Nachrichten-Aufzeichnungsgerät nach einem der Ansprüche 1 oder 2 umgesetztes Verfahren, wobei dieses Aufzeichnungsgerät versehen ist mit
- einem Analog/Digital-Wandler (3),
- einem Speicher (8) zum Aufzeichnen der digitalen Nachrichtenmuster, und
- einem Mikroprozessor (9), um insbesondere das speicherbedingte Lesen, Löschen oder Schreiben der besagten Muster zu steuern, und um den Komprimierungsgrad der dort aufzuzeichnenden Muster zu ändern,
- zwei gesonderten Komprimierungsvorrichtungen (7), um die aus dem Analog/Digital-Wandler kommenden Muster zu komprimieren, die beide anhand einer selben Anzahl pro Zeiteinheit entnommenen Mustern arbeiten, wobei die erste Vorrichtung komprimierte Signale mit einem ersten Komprimierungsgrad, und die zweite Vorrichtung komprimierte Signale mit einem größeren Komprimierungsgrad abgibt, und der Mikroprozessor versehen ist mit
- ersten Verfahren zum Komprimieren ankommender digitaler Muster mit der ersten Komprimierungsvorrichtung, wobei folglich der kleinste Komprimierungsgrad angewandt wird, und um im Zuge ihrer Komprimierung komprimierte Muster in den Speicher zu schreiben, und
- zweiten Verfahren zum Lesen von zuvor in den Speicher geschriebenen Mustern, um sie der zweiten Komprimierungsvorrichtung zuzuführen, damit sie erneut komprimiert werden, diesmal mit dem größten Komprimierungsgrad, und um die so komprimierten Muster erneut in den Speicher zu schreiben, indem die weniger komprimierten Muster ersetzt werden,
wobei das Verfahren für Tonnachrichten bestimmt ist, deren Empfang mit gesonderten Elementen stattfindet,
**dadurch gekennzeichnet, dass** der Mikroprozessor die ersten Verfahren anwendet, solange der Füllpegel des Speichers unter einem bestimmten Prozentsatz liegt, und wenn der Füllpegel des Speichers den besagten Prozentsatz übersteigt, er auf das Ende des Empfangs des laufenden Elements wartet, und dann die Wiederaufnahme aller zuvor im Speicher enthaltenen Muster und deren Übertragung zur zweiten Komprimierungsvorrichtung einleitet, damit sie erneut komprimiert werden, jedoch mit dem größten Komprimierungsgrad, und schließlich schreibt er die mit dem größten Verhältnis komprimierten Muster in den Speicher, indem er die weniger komprimierten Muster ersetzt.

**6.** In einem Nachrichten-Aufzeichnungsgerät nach einem der Ansprüche 1 oder 2 umgesetztes Verfahren, wobei dieses Aufzeichnungsgerät versehen ist mit
- einem Analog/Digital-Wandler (3),
- einem Speicher (8) zum Aufzeichnen der digitalen Nachrichtenmuster, und
- einem Mikroprozessor (9), um insbesondere das speicherbedingte Lesen, Löschen oder Schreiben der besagten Muster zu steuern, und um den Komprimierungsgrad der dort aufzuzeichnenden Muster zu ändern,
- zwei gesonderten Komprimierungsvorrichtungen (7), um die aus dem Analog/Digital-Wandler kommenden Muster zu komprimieren, die beide anhand einer selben Anzahl pro Zeiteinheit entnommenen Mustern arbeiten, wobei die erste Vorrichtung komprimierte Signale mit einem ersten Komprimierungsgrad, und die zweite Vorrichtung komprimierte Signale mit einem größeren Komprimierungsgrad abgibt, und der Mikroprozessor versehen ist mit
- ersten Verfahren zum Komprimieren ankommender digitaler Muster mit der ersten Komprimierungsvorrichtung, wobei folglich der kleinste Komprimierungsgrad angewandt wird, und um im Zuge ihrer Komprimierung komprimierte Muster in den Speicher zu schreiben, und
- zweiten Verfahren zum Lesen von zuvor in den Speicher geschriebenen Mustern, um sie der zweiten Komprimierungsvorrichtung zuzuführen, damit sie erneut komprimiert werden, diesmal mit dem größten Komprimierungsgrad, und um die so komprimierten Muster erneut in den Speicher zu schreiben, indem die weniger komprimierten Muster ersetzt werden,
wobei das Verfahren für Tonnachrichten bestimmt ist, deren Empfang mit gesonderten Elementen stattfindet,
**dadurch gekennzeichnet, dass** der Mikroprozessor zuerst das Verfahren nach Anspruch 5 anwendet, und dann, nachdem der Füllpegel einen bestimmten Prozentsatz überschritten hat und alle Muster erneut gelesen und mit einem höheren Komprimierungsgrad erneut in den Speicher geschrieben wurden, wendet er das Verfahren nach Anspruch 4 für die nachkommenden Meldungen an.

**7.** Telefon-Anrufbeantworter/Aufzeichnungsgerät, **dadurch gekennzeichnet, dass** ein Nachrichten-Aufzeichnungsgerät eingegliedert ist, und dieses selbst versehen ist mit
- einem Analog/Digital-Wandler (3),
- einem Speicher (8) zum Aufzeichnen der digitalen Nachrichtenmuster, und
- einem Mikroprozessor (9), um insbesondere das speicherbedingte Lesen, Löschen oder Schreiben der besagten Muster zu steuern, und um den Komprimierungsgrad der dort aufzuzeichnenden Muster zu ändern,
- zwei gesonderten Komprimierungsvorrichtungen (7), um die aus dem Analog/Digital-Wandler kommenden Muster zu komprimieren, die beide anhand einer selben Anzahl pro Zeiteinheit entnommenen Mustern arbeiten, wobei die erste Vorrichtung komprimierte Signale mit einem ersten Komprimierungsgrad, und die zweite Vorrichtung komprimierte Signale mit einem größeren Komprimierungsgrad abgibt, und der Mikroprozessor versehen ist mit
- ersten Verfahren zum Komprimieren ankommender digitaler Muster mit der ersten Komprimierungsvorrichtung, wobei folglich der kleinste Komprimierungsgrad angewandt wird, und um im Zuge ihrer Komprimierung komprimierte Muster in den Speicher zu schreiben, und
- zweiten Verfahren zum Lesen von zuvor in den Speicher geschriebenen Mustern, um sie der zweiten Komprimierungsvorrichtung zuzuführen, damit sie erneut komprimiert werden, diesmal mit dem größten Komprimierungsgrad, und um die so komprimierten Muster erneut in den Speicher zu schreiben, indem die weniger komprimierten Muster ersetzt werden.

**7.** Telefon-Anrufbeantworter/Aufzeichnungsgerät nach Anspruch 6, **dadurch gekennzeichnet, dass** die besagten Nachrichten Tonnachrichten sind.

**8.** Telefon-Anrufbeantworter/Aufzeichnungsgerät nach einem der Ansprüche 6 oder 7, **dadurch gekennzeichnet, dass** der Mikroprozessor des Aufzeichnungsgeräts ein Programmelement aufweist, das Verfahren enthält, um die Umsetzung der Schritte des Verfahrens nach Anspruch 4 zu ermöglichen.

**9.** Telefon-Anrufbeantworter/Aufzeichnungsgerät nach einem der Ansprüche 6 oder 7, **dadurch gekennzeichnet, dass** der Mikroprozessor des Aufzeichnungsgeräts ein Programmelement aufweist, das Verfahren enthält, um die. Umsetzung der Schritte des Verfahrens nach Anspruch 5 zu ermöglichen.
